**Europäisches Patentamt**

**European Patent Office**

**Office européen des brevets**

(19)

(11) Veröffentlichungsnummer: **0 089 542**
**B1**

(12) # EUROPÄISCHE PATENTSCHRIFT

(45) Veröffentlichungstag der Patentschrift:
13.08.86

(51) Int. Cl.⁴: **B 23 P 6/04**

(21) Anmeldenummer: **83102215.7**

(22) Anmeldetag: **07.03.83**

(54) **Verfahren zum Reparieren von Pumpengehäusen sowie Vorrichtung zum Durchführen des Verfahrens und danach repariertes Pumpengehäuse.**

(30) Priorität: **18.03.82 DE 3209917**

(43) Veröffentlichungstag der Anmeldung:
**28.09.83 Patentblatt 83/39**

(45) Bekanntmachung des Hinweises auf die Patenterteilung:
**13.08.86 Patentblatt 86/33**

(84) Benannte Vertragsstaaten:
**AT BE CH DE FR GB IT LI LU NL SE**

(56) Entgegenhaltungen:
**GB-A-1 269 598**
**US-A-3 136 044**
**US-A-3 142 114**
**US-A-4 040 471**

(73) Patentinhaber: **Soudbrase- Schweisstechnik GmbH, Gutedelstrasse 6, D-7500 Karlsruhe 41 (DE)**

(72) Erfinder: **Meier, Gudrun, Gutedelstrasse 6, D-7500 Karlsruhe 41 (DE)**

(74) Vertreter: **Schmitt, Hans, Dipl.- Ing., Dreikönigstrasse 13, D-7800 Freiburg (DE)**

EP 0 089 542 B1

## Beschreibung

Die Erfindung betrifft ein Verfahren zum Reparieren von Pumpengehäusen von Pumpen, die zum Fördern von sand- oder kieshaltigem od. dgl. Fördergut dienen, insbesondere zum Beseitigen von Auswaschungen od. dgl. in der Pumpengehäuse-Wandung.

Solche Pumpen werden z. B. in Kieswerken zur Sand- und/ oder Kiesförderung, insbesondere in Vermischung mit Wasser eingesetzt. Die Pumpengehäuse weisen nach einiger Betriebszeit an ihrer Innenwand Auswaschungen od. dgl. Vertiefungen auf, die sich während des Betriebes gegebenenfalls auch so weit ausdehnen können, daß die Gehäusewand durchgescheuert wird.

Da bisher in Anbetracht des praktisch nicht zu bearbeitenden Gußmaterials des Pumpengehäuses keine Möglichkeit einer Reparatur gefunden wurde, war man gezwungen, das Pumpengehäuse zu verschrotten und ein neues zu verwenden. Dies bedeutet jedoch einen erheblichen Aufwand. Man hatte zwar auch schon daran gedacht, durch Auftragsschweißen und anschließendes Abschleifen eine Reparatur vorzunehmen; jedoch ist wegen des verwendeten Gußmaterials eine solche Reparatur praktisch nicht durchführbar.

Aufgabe der vorliegenden Erfindung ist es, Verfahrensschritte zu finden, mit der eine Reparatur praktisch möglich ist, so daß ein Verschrotten des beschädigten Pumpengehäuses vermieden werden kann.

Zur Lösung dieser Aufgabe wird erfindungsgemäß ein Verfahren vorgeschlagen, das durch folgende Verfahrensschritte gekennzeichnet ist:

a) Anfertigung eines Abdruckmodells der Auswaschung od. dgl.;

b) Übertragung des Abdruckes auf eine Gießform;

c) formgerechtes Abdecken der Gießformöffnung;

d) Gießen eines Füllstückes für die Auswaschung od.dgl.;

e) Befestigen des Füllstückes in der Auswaschung.

Somit wird ein paßgenaues Füllstück für die Auswaschung angefertigt, mit dem dann diese formgenau verschlossen werden kann, so daß der ursprüngliche Verlauf der Gehäuse-Innenwandung wieder hergestellt ist.

Bevorzugt ist vorgesehen, daß nach dem Übertragen des Abdruckes auf die Gießform ein oder mehrere Füllstück-Befestigungsteile in die Formhöhlung eingelegt werden. Dadurch kann gleich beim Gießen des Füllstückes ein Verankern von Befestigungsteilen erfolgen.

Eine Weiterbildung sieht vor, daß vor dem Befestigen des Füllstückes in der Auswaschung od. dgl. eine Dichtung zwischen das Füllstück und die Auswaschung eingelegt wird, wobei gegebenenfalls die Dicke der Dichtung bei der Anfertigung des Füllstückes mitberücksichtigt wird. Diese Dichtung kann entweder grundsätzlich oder aber insbesondere auch dann verwendet werden, wenn die Pumpengehäuse-Wandung ganz durchgescheuert ist.

Vorteilhafterweise ist das Formgegenstück vergleichsweise großvolumig und besteht aus wärmeaufnahmefähigem Material. Dadurch kann dem Füllstück beim Gießen an seiner die spätere Beaufschlagungsseite bildenden Oberseite schnell Wärme entzogen werden, wobei durch diese rasche Abkühlung eine Härtung an der Oberfläche entsteht.

Zusätzliche Ausgestaltungen der Erfindung sind in den weiteren Unteransprüchen aufgeführt. Nachstehend sind Ausführungsbeispiele der Erfindung mit ihren wesentlichen Einzelheiten anhand der Zeichnung noch näher beschrieben.

Es zeigt:

Fig. 1 eine Seitenansicht eines im Bereich einer Auswaschung aufgebrochen dargestellten Pumpengehäuses,

Fig. 2 eine Stirnseitenansicht des in Fig. 1 gezeigten Pumpengehauses,

Fig. 3 eine Aufsicht einer Auswaschung,

Fig. 4 eine Seitenansicht einer im Schnitt gehaltenen Gießform mit eingelegten Befestigungsteilen,

Fig. 5 eine teilweise im Schnitt gehaltene Stirnseitenansicht gemäß der Schnittlinie V-V in Fig. 4,

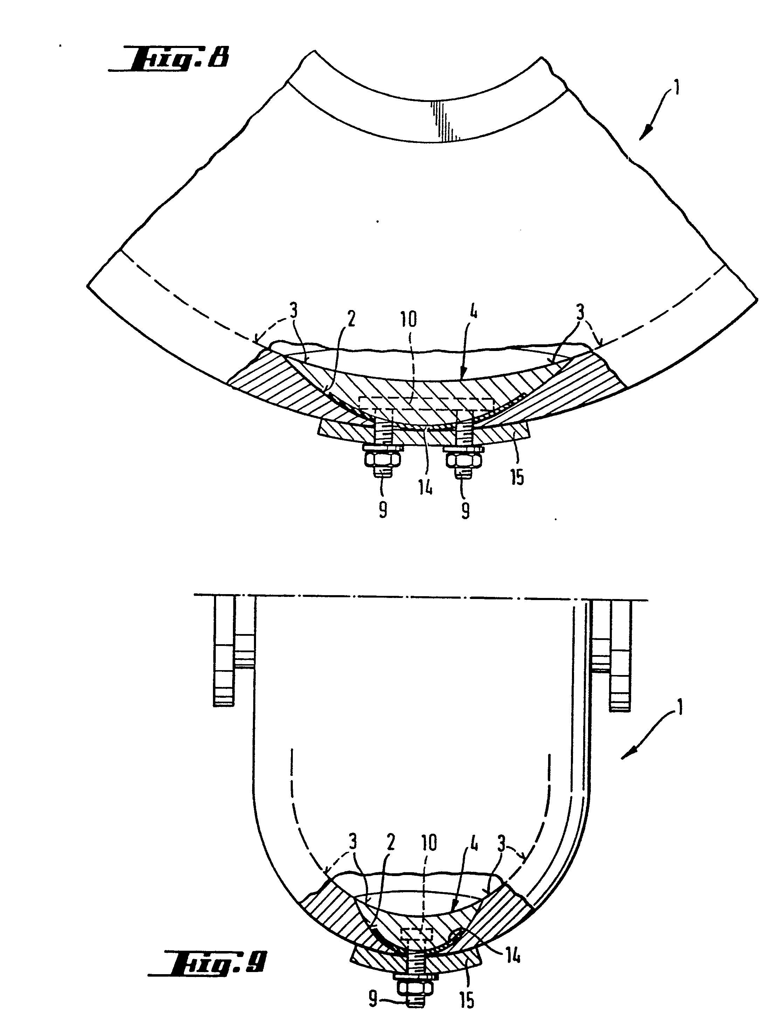

Fig. 6 und 7 Gehäuseabschnitte im Bereich einer Auswaschung, die durch ein darin eingesetztes Füllstück ausgefüllt ist,

Fig. 8 und 9 Ansichten eines Pumpengehäuse-Abschnittes ähnlich Fig. 6 und 7, hier jedoch mit durch die Gehäusewandung durchgescheuerten Auswaschungen.

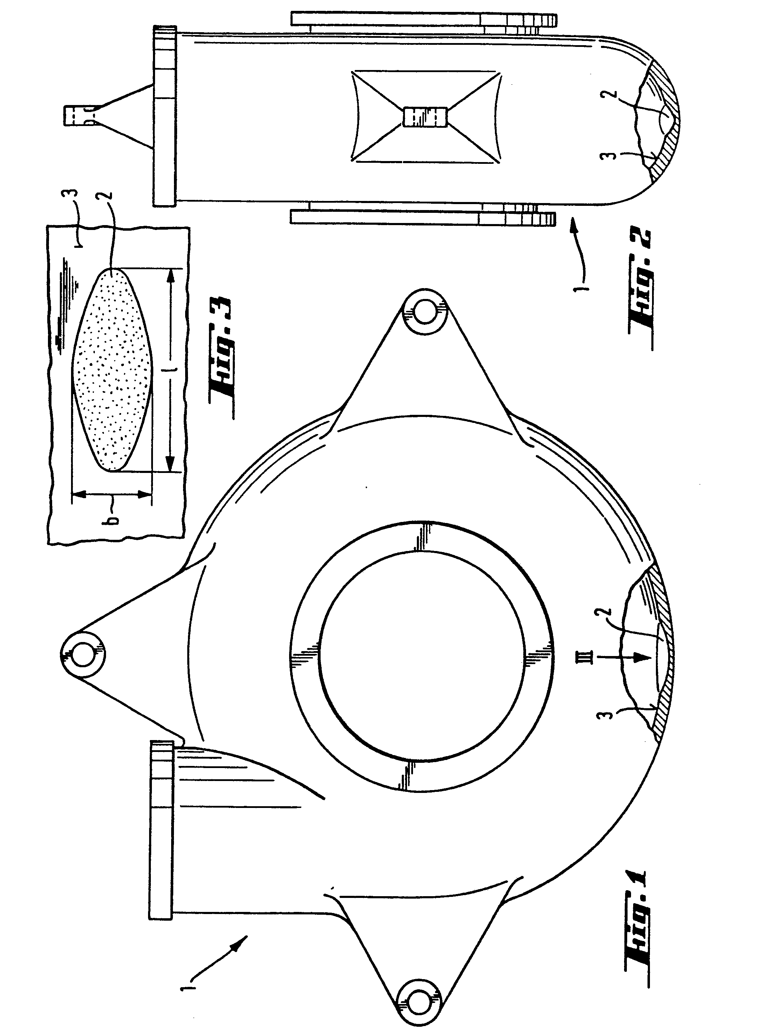

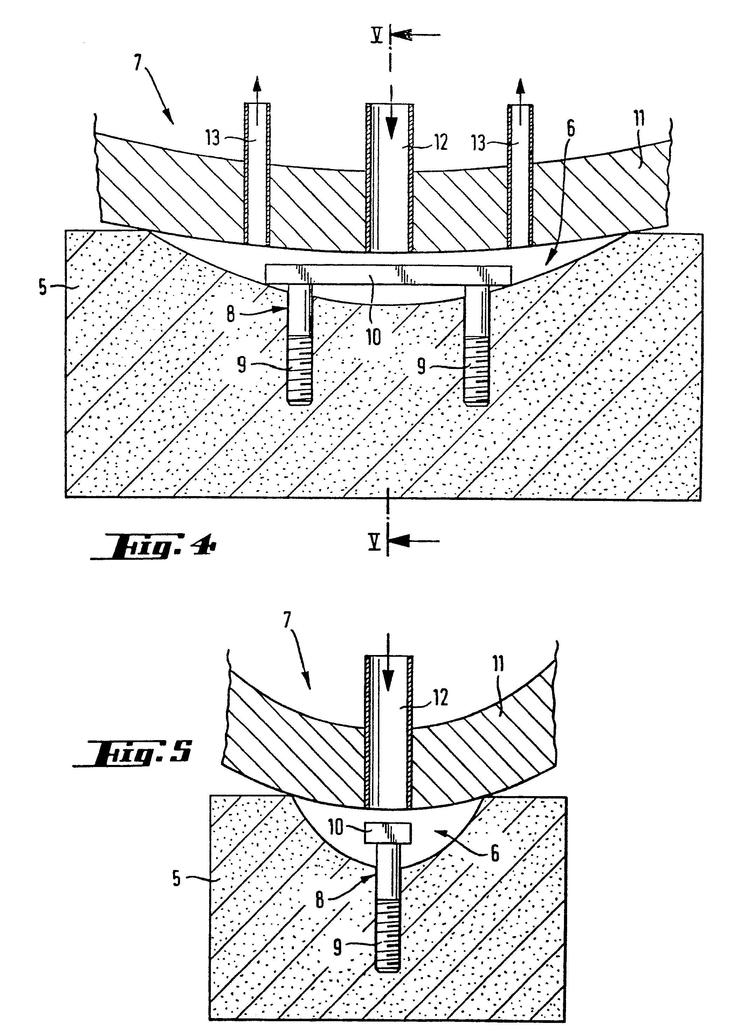

Die Figuren 1 und 2 zeigen Kreiselpumpen-Gehäuse 1, bei denen durch kieshaltiges bzw. sandhaltiges Fördergut Auswaschungen 2 in Form von Vertiefungen an der Gehäuse-Innenwandung 3 entstanden sind.

Solche Auswaschungen 2 od. dgl. können bei größeren Pumpen, wie sie beispielsweise in Kieswerken eingesetzt werden, Längen 1 von etwa 50 cm bei einer Breite b von etwa 20 cm erreichen (vgl. Fig. 3). Unter ungunstigen Umständen kann die Gehäusewand auch vollstandig durchgescheuert werden, so daß dann Fördergut dort austreten kann. Ein solcher Fall ist in den Figuren 8 und 9 dargestellt, wobei hier jedoch die Auswaschungen 2 bereits durch Füllstücke 4 repariert sind.

Bislang gab es wegen dem verwendeten Gußmaterial für die Pumpengehäuse keine praktisch brauchbare Möglichkeit zur Reparatur, so daß diese verschrottet werden mußten. Erfindungsgemäß wird nun ein Reparaturverfahren vorgeschlagen, mittels dem beschädigte Kreiselpumpen-Gehäuse 1 (Fig. 1 bis 3) repariert und dann weiterverwendet werden können. Im wesentlichen läuft das Reparaturverfahren eines defekten Sandpumpen-Gehäuses 1 od. dgl. folgendermaßen ab:

Zunächst wird die ausgewaschene Stelle z. B. mit einer Drahtbürste od. dgl. gereinigt und mit einem Trennmittel, z. B. Paraffin-Spray eingesprüht. Danach wird die ausgewaschene Stelle mit einem Füllmittel ausgefüllt, wobei als Füllmittel beispielsweise streichfähiger Gips, Plastikmasse oder andere Formmaterialien verwendet werden können. Beim Füllen der Auswaschung 2 braucht die Form der Gehäuse-Innenwandung 3 nicht berücksichtigt werden. Bei größeren Auswaschungen 2 ist es empfehlenswert, in das Füllmaterial eine Armierung zur Stabilisierung einzulegen. Nach dem Aushärten des Füllmaterials wird das Abdruckmodell der Auswaschung 2 entfernt.

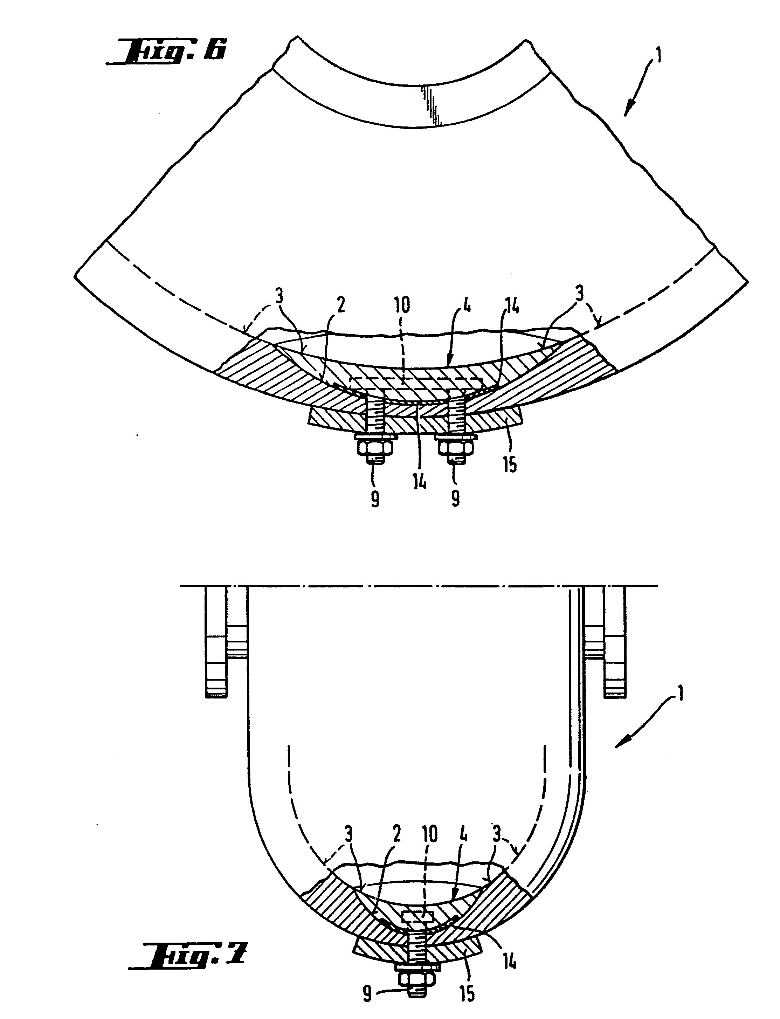

Mit dem Abdruckmodell kann dann in Formsand 5 (Fig. 4 und 5) ein Negativabdruck 6 gebildet werden. Dieser Abdruck bildet später den unteren Teil der insgesamt mit 7 bezeichneten Gießform. In die durch den Abdruck entstandene Vertiefung (Negativabdruck 6) im Formsand 5 können dann Befestigungselemente 8 eingelegt werden.

Im Ausführungsbeispiel sind Gewindebolzen 9 vorgesehen, die kopfseitig durch ein brückenartiges Ankerteil 10 miteinander verbunden sind. Zum Fixieren des Befestigungselementes 8 vor und während des Gießvorganges werden die Gewindebolzen 9 so weit in den Formsand 5 eingedrückt, bis das Ankerteil 10 nahe am Boden des Negativabdruckes 6 zu liegen kommt (Fig. 4). Die Größe des Ankerteiles 10 und auch die Anzahl der verwendeten Gewindebolzen 9 richtet sich nach der Größe der Auswaschung 2 od. dgl.

Der Negativabdruck 6 wird dann mittels eines Formgegenstückes 11 verschlossen. Dieses Formgegenstück 11 hat zumindest im Bereich des Negativabdruckes 6 der Gießform 7 eine der ursprünglichen Innenwand 3 des Pumpengehäuses 1 im Bereich der Auswaschung 2 entsprechende Positivform. Es besteht aus wärmeaufnahmefähigem Material und ist vergleichsweise großvolumig ausgebildet. Bei genügend großer Ausbildung dieses Formgegenstückes 11 kann es universell für unterschiedlich große Auswaschungen 2 bei gleichen Pumpen-Gehäusen 1 verwendet werden. Das Formgegenstück 11 weist eimen Eingußkanal 12 sowie zwei Entlüftungskanüle 13 auf. In Funktionsstellung (Fig. 4 und 5) liegt das Formgegenstück 11 dicht an den Rändern des Negativabdruckes 6 auf, damit an diesen Übergängen beim späteren Gießen kein flüssiges Metall austreten kann. Als Gießmaterial kann Grauguß (z. B. GG 22) verwendet werden. Nach dem Füllen der Gießform 7 wird die Gußlegierung an der Oberseite entlang des Formgegenstückes 1 durch dessen hohe Wärmeaufnahmefähigkeit rasch abgekühlt, wodurch eine Härtung (Weißguß) an dieser Oberfläche entsteht. Bei dem späteren Füllstück 4 bildet diese gehärtete Oberseite dann die Beaufschlagungsseite während des Betriebes.

Das erkaltete Gußteil mit den eingegossenen Befestigungselementen 8, von denen die Gewindebolzen 9 nach unten herausragen, wird anschließend in die Auswaschung 2 des Gehäuses 1 eingesetzt. Dazu werden vorher für die Gewindebolzen 9 an den entsprechenden Stellen Löcher in die Gehäusewand eingebracht. Dies erfolgt bevorzugt mittels einer elektrischen Brennelektrode oder gegebenenfalls mit einem elektrischen Fugenhobler. Am Grund der Auswaschung 2 wird eine Dichtung 14 eingelegt, die insbesondere etwas größer als die Seitenerstreckung des Ankerteiles 10 ist. Auch die Dichtung 14 weist entsprechende Löcher zum Durchgreifen der Gewindebolzen 9 auf. Nach dem Einsetzen des Füllstückes 4 werden die Gewindebolzen 9 vorzugsweise unter Zwischenlage einer Verstärkungsplatte 15 festgeschraubt. Die Verstärkungsplatte 15 ist dabei an die Form der Gehäuse-Außenwand angepaßt.

Nach dem Festlegen des Füllstückes 4 können im Übergangsbereich zwischen Füllstück 4 und angrenzender Gehäuse-Innenwandung 3 eventuell vorhandene Unebenheiten geglättet, insbesondere verschliffen werden. Die Reparatur ist damit beendet und das Kreiselpumpen-Gehäuse 1 kann wieder weiterverwendet werden. Anstatt des z. B. verwendbaren Graugusses für das Füllstück 4 können auch andere Verschleißlegierungen mit z. B. Wolfram, Chrom, Mangan u. dgl. verwendet werden.

Die Figuren 8 und 9 zeigen noch Gehäuseabschnitte, bei denen die Auswaschungen 2 so groß sind, daß die Gehäusewand durchgescheuert ist. Prinzipiell ist auch hier das gleiche, vorbeschriebene Reparaturverfahren anwendbar, wobei hier jedoch insbesondere darauf geachtet werden muß, daß sowohl die Dichtung 14 als auch die Verstärkungsplatte 15 wesentlich größer als die durchgescheuerte Stelle am Pumpengehäuse ist.

Anstatt bzw. auch in Verbindung mit der Befestigung durch Befestigungselemente 8 könnte das Füllstück 4 auch mittels eines Klebstoffes in die Auswaschung eingeklebt werden. Dabei könnte der Klebstoff gleichzeitig als Befestigungsmittel und Ersatz für die Dichtung 14 dienen oder aber es kann zusätzlich zur Befestigung mittels Gewindebolzen 9 od. dgl. zur Erhöhung der Festigkeit der Verbindung zwischen Pumpengehäuse und Füllstück 4 Klebstoff verwendet werden.

Erwähnt sei noch, daß gegebenenfalls die Dicke der Dichtung 14 bei der Anfertigung des Füllstückes 4 mitberücksichtigt werden kann, indem beispielsweise ein entsprechend dickes Einlagestück beim Herstellen des Abdruckmodells mitverwendet wird. Vorteilhaft ist auch, daß das Füllstück 4 insbesondere bei einer Verschraubung mit dem Pumpengehäuse 1 auswechselbar an diesem befestigt ist. Dadurch kann bei einem erneuten Verschleiß im Bereich des Füllstückes 4 ein neues Füllstück 4 durch Auswechseln eingesetzt werden, so daß die Reparatur vergleichsweise schnell, gegebenenfalls auch am Einsatzort vorgenommen werden kann. Erwähnt sei noch, daß auch bei einer Klebeverbindung zwischen Füllstück 4 und Gehäuse 1 ein solches Auswechseln möglich ist, indem die Klebung durch Überhitzen gelöst wird.

## Patentansprüche

1. Verfahren zum Reparieren von Pumpengehäusen für Pumpen, die zum Fördern von sand- oder kieshaltigem od. dgl. Fördergut dienen, insbesondere zum Beseitigen von Auswaschungen od. dgl. in der Pumpengehäuse-Wandung, gekennzeichnet durch folgende Verfahrensschritte:

a) Anfertigung eines Abdruckmodells der Auswaschung

b) Übertragung des Abdruckes auf eine Gießform (7)

c) formgerechtes Abdecken der Gießformöffnung

d) Gießen eines Füllstückes (4) für die Auswaschung (2) od. dgl.

e) Befestigen des Füllstückes (4) in der Auswaschung (2).

2. Verfahren nach Anspruch 1, dadurch gekennzeichnet, daß nach dem Übertragen des Abdruckes (6) auf die Gießform ein oder mehrere Füllstück-Befestigungsteile (8) in die Formhöhlung eingelegt werden.

3. Verfahren nach Anspruch 1 oder 2, dadurch gekennzeichnet, daß das Füllstück (4) mittels eines Klebstoffes in die Auswaschung (2) eingeklebt wird.

4. Verfahren nach einem der Ansprüche 1 bis 3, dadurch gekennzeichnet, daß vor dem Befestigen des Füllstückes (4) in der Auswaschung (2) od. dgl. eine Dichtung zwischen das Füllstück (4) und die Auswaschung (2) eingelegt wird, wobei gegebenenfalls die Dicke der Dichtung (14) bei der Anfertigung des Füllstückes mitberücksichtigt wird.

5. Verfahren nach einem der Ansprüche 1 bis 4, dadurch gekennzeichnet, daß im Bereich der Auswaschung (2) ein Befestigungsloch bzw. -löcher für wenigstens ein an dem Füllstück (4) befindliches Befestigungsteil eingebracht wird (werden), vorzugsweise mittels einer elektrischen Brennelektrode od. dgl.

6. Verfahren nach einem der Ansprüche 1 bis 5, dadurch gekennzeichnet, daß die mit dem Füllstück (4) verbundenen, durch das bzw. die Befestigungslöcher hindurchgesteckten Befestigungsteile (9) an der Außenseite des Pumpengehäuses (1) gegebenenfalls unter Zwischenlage einer Verstärkungsplatte (15) festgelegt werden.

7. Verfahren nach einem der Ansprüche 1 bis 6, dadurch gekennzeichnet, daß zumindest der Übergang zwischen eingesetztem, befestigtem Füllstück (4) und der sich daran anschließenden Gehäuse-Innenwandung (3) geglättet, vorzugsweise verschliffen wird.

8. Verfahren nach einem der Ansprüche 1 bis 7, dadurch gekennzeichnet, daß die den späteren Gehäusewand-Abschnitt bildende Innenseite des Füllstückes (4) gehärtet wird, vorzugsweise durch Verwendung eines verhältnismäßig großvolumigen, wärmeaufnahmefähigen Abdeckteiles (Formgegenstück 11).

## Claims

1. A method for repairing pump houses for pumps serving to deliver material containing sand or gravel or the like, in particular for rectifying erosion or the like in the wall of the pump house, characterized by the following method steps:

a) making a pattern of the erosion

b) transferring the pattern to a mold (7)

c) covering the mold opening accurately as to shape

d) casting a filler (4) for the erosion (2) or the like

e) fixing the filler (4) in the erosion (2).

2. The method as claimed in claim 1, characterized in that after transferring the pattern (6) to the mold, one or more fixing members (8) for the filler are placed in the mold cavity.

3. The method as claimed in claim 1 or claim 2, characterized in that the filler (4) is affixed in the erosion (2) by means of an adhesive.

4. The method as claimed in any one of claims 1 to 3, characterized in that prior to fixing the filler (4) in the erosion (2) or the like, a seal is placed between the filler (4) and the erosion (2), the thickness of the seal (14) possibly being allowed for when making the filler.

5. The method as claimed in any one of claims 1 to 4, characterized in that a mounting hole or holes for at least one fixing member located on the filler (4) is (are) made in the region of the erosion (2), preferably by means of an electric burning electrode or the like.

6. The method as claimed in any one of claims 1 to 5, characterized in that the fixing members (9) which are connected to the filler (4) and are passed through the mounting hole(s) are secured in position on the outside of the pump house (1), possibly with a reinforcing plate (15) being interposed.

7. The method as claimed in any one of claims 1 to 6, characterized in that at least the transition between the inserted, fixed filler (4) and the adjoining inside wall (3) of the house is smoothed, preferably ground.

8. The method as claimed in any one of claims 1 to 7, characterizad in that the inside of the filler (4) forming the later wall segment of the house is hardened, preferably by using a cover member (mold counterpart 11) of relatively large volume and having heat absorption capacity.

## Revendications

1. Procédé pour la réparation de corps de pompe pour pompes qui servent au transport de matière à transporter contenant du sable ou du gravier, ou similaire, en particulier pour l'élimination d'érosions, ou analogues, dans la paroi du corps de pompe caractérisé par les étapes dans procédé suivantes:

a) confection d'un modèle d'empreinte de l'érosion,

b) transfert de l'empreinte sur un moule de coulée (7),

c) recouvrement de l'ouverture du moule de coulée avec une forme correcte,

d) coulée d'un élément de remplissage (4) pour l'érosion (2), ou analogue,

e) fixation de l'élément de remplissage (4) dans l'érosion (2).

2. Procédé selon la revendication 1, caractérisé en ce qu'après le transfert de l'empreinte (6) sur le moule de coulée, on insère dans la cavité de moule un ou plusieurs éléments de fixation d'élément de remplissage.

3. Procédé selon l'une des revendications 1 et 2, caractérisé en ce que l'on colle l'élément de remplissage (4) dans l'érosion (2).

4. Procédé selon l'une des revendications 1 à 3, caractérisé en ce qu'avant la fixation de l'élément de remplissage (4) dans l'érosion (2), ou analogue, on insère un joint entre l'élément de remplissage (4) et l'érosion (2), en tenant aussi compte, éventuellement, de l'épaisseur du joint lors de la confection de l'élément de remplissage.

5. Procédé selon l'une des revendications 1 à 4, caractérisé en ce que dans la région de l'érosion (2), on pratique un ou des trous pour au moins un élément de fixation situé sur l'élément de remplissage, de préférence au moyen d'une électrode électrique de combustion, ou similaire.

6. Procédé selon l'une des revendications 1 à 5, caractérisé en ce que l'on fixe au côté extérieur du corps de pompe (1) les éléments de fixation (9) reliés à l'élément de remplissage (4), éventuellement avec interposition d'une plaque de renforcement (15).

7. Procédé selon l'une des revendications 1 à 6, caractérisé en ce que l'on lisse, de préférence que l'on meule, au moins la transition entre l'élément de remplissage (4) inséré et fixé et la paroi intérieure (3) du corps, qui s'y raccorde.

8. Procédé selon l'une des revendications 1 à 7 caractérisé en ce que l'on durcit le côté intérieur de l'élément de remplissage (4), formant la future partie de paroi de corps, de préférence par utilisation d'un élément de recouvrement de volume relativement grand, capable d'absorber la chaleur (élément complémentaire de moule 11).

*Fig. 3*

*Fig. 1*

*Fig. 2*

0 089 542

**Fig. 4**

**Fig. 5**

0 089 542

Fig. 6

Fig. 7

5

Fig. 8

Fig. 9